# EUROPEAN PATENT SPECIFICATION

(11) **EP 1 667 472 B1**
(45) Date of publication and mention of the grant of the patent: **06.04.2011**
(21) Application number: 04819932.7
(22) Date of filing: 03.12.2004
(51) Int. Cl.: H04Q 3/62

(54) **PRIVATE BRANCH EXCHANGE**
PRIVATE NEBENSTELLEN ANLAGE
CENTRAL TELEPHONIQUE PRIVE

(30) Priority: 05.12.2003 JP 2003407231
(43) Date of publication of application: 07.06.2006
(73) Proprietor: Panasonic Corporation, Kadoma-shi Osaka 571-8501 (JP)
(72) Inventor: NAKAGAWA, Koji, Matsushita Elect. Industrial Co,lt, Chuo-ku,Osaka-shi, Osaka 540-6319 (JP); MATSUFUJI, K. Matsushita Elect. Industrial Co,lt, Chuo-ku,Osaka-shi, Osaka 540-6319 (JP); FUJIOKA, M., Matsushita Elect. Industrial Co,lt, Chuo-ku,Osaka-shi, Osaka 540-6319 (JP); TANABE, Koji., Matsushita Elect. Industrial Co,lt, Chuo-ku,Osaka-shi, Osaka 540-6319 (JP); MATSUMOTO, N., Matsushita Elect. Industrial Co,lt, Chuo-ku,Osaka-shi, Osaka 540-6319 (JP)
(74) Representative: Manitz, Finsterwald & Partner GbR
(86) International application number: PCT/JP2004/018037
(87) International publication number: WO 2005/055622

(56) References cited:
- EP-A- 0 529 359
- JP-A- 9 023 465
- JP-A- 2002 101 435

## Description

### Technical Field

The present invention relates to an exchange to which a wireless base station capable of communicating with a plurality of wireless handsets can be connected.

### Background Art

There has been heretofore an exchange to which a wireless base station is connected so that the exchange can communicate with a plurality of wireless handsets through the wireless base station. Such an exchange has a dedicated interface through which the wireless base station is connected to the exchange. The exchange is designed so that the exchange can communicate with the wireless handsets by connection of the wireless base station to this dedicated interface (for example, see Patent Document 1).

Patent Document: Japanese Patent Publication No. JP-A-8-130757/(1996)

### Disclosure of the Invention

### Problems that the Invention is to Solve

In the background-art configuration, however, the dedicated interface is required for operating the wireless base station, whereby the exchange comes high in cost for a user thereof.

In addition, when only a dedicated interface having I/Fs to which a plurality of wireless base stations can be connected is provided, the dedicated interface has to be purchased for connecting or adding only one wireless base station. Thus, the unused I/Fs are wasteful.

EP 0 529 359 A discloses a private branch exchange with integrated mobile section for controlling cordless terminals which can be operated via base stations. For this purpose, the private branch exchange exhibits freely configurable interface modules for wire-connected terminals and for DECT-type wireless terminals which can be operated via a base station. To provide control, a central processor is provided for all switching and user facility control tasks and a subordinate processor is provided for connection set-up/release control for the cordless terminals in accordance with an associated set of call numbers. The processors and the interface modules are connected to one another via a bus system.

It is therefore an object of the present invention to provide an exchange which can operate different kinds of wireless base stations without any interface dedicated to the wireless base station. Means for Solving the Problems

The present invention provides a private branch exchange including: an extension interface capable of communicating with an extension telephone or a wireless base station; a time division switch for connecting/disconnecting channels; a memory for storing at least one of setting information and a program; a clock generator for generating a sync signal for the aforementioned wireless base station; and a CPU for controlling the private branch exchange as a whole wherein said setting information includes data required to control communication with a wireless base station to be connected to said extension interface (12), the private branch exchange being characterized in that:
the aforementioned extension interface includes a feeder for feeding predetermined power to the aforementioned extension telephone or the aforementioned wireless base station, and a detector for detecting the kind of the aforementioned extension telephone or the aforementioned wireless base station; and
when the aforementioned detector detects the aforementioned wireless base station based on a response received by the aforementioned extension interface within a predetermined feeding period after power is supplied from the aforementioned feeder, the aforementioned detector further detects the kind of the aforementioned wireless base station based on a response received by the aforementioned extension interface to an enquiry transmitted by the aforementioned extension interface
and a default value of the kind of said wireless base station is set as port of the setting information so as to associate said wireless base station with said extension interface;

### Effect of the Invention

When an exchange according to the present invention detects that a wireless base station is connected to an extension interface, the exchange outputs a sync signal to a communication channel of the extension interface. Based on the sync signal received through the communication channel, the wireless base station outputs a radio signal so as to communicate with a wireless handset based on the sync signal. Thus, the private branch exchange according to the present invention has an advantage that a wireless base station can be operated without any interface dedicated to the wireless base station.

### Brief Description of the Drawings

[Fig. 1] A configuration diagram of a private branch exchange system according to Embodiment 1 of the present invention.
[Fig. 2] A configuration diagram of an extension interface in Fig. 1.
[Fig. 3] A diagram for explaining the operation of a detector in Fig. 2.
[Fig. 4] A configuration diagram of a wireless base station in Fig. 1.
[Fig. 5] A diagram for explaining slot timing of sync signals.
[Fig. 6] A diagram for explaining a data format.
[Fig. 7] A diagram for explaining the functions of the sync signals.
[Fig. 8] An operation flow chart of the private branch exchange according to Embodiment 1 of the present invention.
[Fig. 9] An operation flow chart of the wireless base station according to Embodiment 1 of the present invention.
[Fig. 10] An operation flow chart of the wireless base station according to Embodiment 1 of the present invention.

### Description of Reference Numerals

1 private branch exchange; 2a,b extension telephone;
3a,b wireless base station; 4a,b,c wireless handset;
11a,b line interface circuit;
12a-d extension interface circuit;
13 time division switch; 14 memory;
15 CPU; 16 clock generator;
17 communication I/F circuit; 18 driver receiver circuit;
19 transformer; 21 detector;
22 feeder; 31 transformer;
32 driver receiver circuit; 33 communication I/F circuit;
34 RF circuit; 35 baseband IC;
36 base station CPU; 37 base station memory;
38 indicator

### Best Mode for Carrying Out the Invention

In order to solve the foregoing problems, the present invention provides a private branch exchange including: an extension interface capable of communicating with an extension telephone or a wireless base station; a time division switch for connecting/disconnecting channels; a memory for storing at least one of setting information and a program; a clock generator for generating a sync signal for the wireless base station; and a CPU for controlling the private branch exchange as a whole; the private branch exchange being characterized in that:
the extension interface includes a feeder for feeding predetermined power to the extension telephone or the wireless base station, and a detector for detecting the kind of the extension telephone or the wireless base station; and
when the detector detects the wireless base station based on a response received by the extension interface within a predetermined feeding period after power is supplied from the feeder, the detector further determines whether the wireless base station is a 2.4 GHz wireless base station or a DECT wireless base station, based on a response received by the extension interface to an enquiry transmitted by the extension interface. The private branch exchange can operate the wireless base station without any interface dedicated to the wireless base station.

In order to solve the foregoing problems, according to another aspect of the present invention, the present invention provides a private branch exchange system including: an extension interface capable of communicating with an extension telephone or a wireless base station; a time division switch for connecting/disconnecting channels; a memory for storing at least one of setting information and a program; a clock generator for generating a sync signal for the wireless base station; and a CPU for controlling the private branch exchange as a whole; the private branch exchange system being characterized in that:
the extension interface includes a feeder for feeding predetermined power to the extension telephone or the wireless base station, and a detector for detecting the kind of the extension telephone or the wireless base station; and
the detector determines which is connected, the extension telephone or the wireless base station, based on a response received by the extension interface within a predetermined feeding period after power is supplied from the feeder, and when the detector detects the wireless base station, the extension interface communicates with the wireless base station, and the detector determines whether the wireless base station is a 2.4 GHz wireless base station or a DECT wireless base station, based on a response of the wireless base station to an enquiry transmitted by the extension interface. Even an exchange allowing connection of a telephone to an extension interface circuit can be changed so that a wireless base station can be connected thereto easily.

### (Embodiment 1)

An embodiment of the present invention will be described below with reference to the drawings.

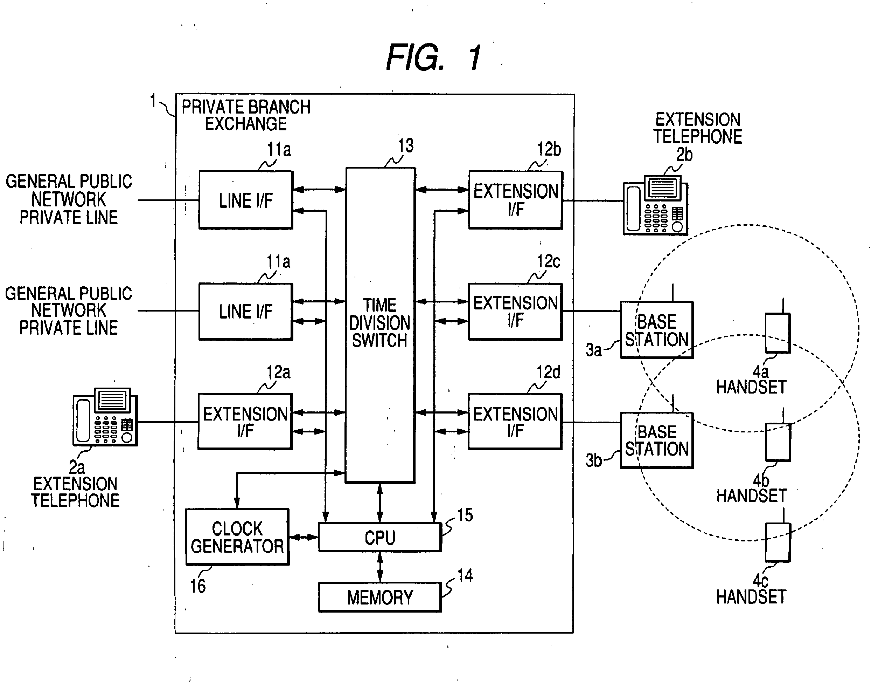

Fig. 1 is a configuration diagram of an exchange system according to Embodiment 1 of the present invention, which is constituted by an private branch exchange 1, extension telephones 2, wireless base stations 3 and wireless handsets 4.

First, the configuration of the private branch exchange 1 will be described. The private branch exchange 1 has line interfaces 11, extension interfaces 12, a time division switch 13, a memory 14, a CPU 15 and a clock generator 16 as shown in Fig. 1.

The line interfaces 11a and 11b are line interfaces to which ISDN lines, analog lines, etc. from an office exchange can be connected. Each line interface 11a, 11b has functions such as detection of an incoming call from such an external line, response to the incoming call, acquisition or dial signal delivery for an outgoing call to the external line, etc.

The time division switch 13 is a switch which can connect/disconnect channels between the extension interfaces 12 and between the extension interfaces 12 and the external line interfaces 11. The time division switch 13 has a channel memory and a peripheral control circuit for controlling the address of the channel memory in accordance with a time slot, in the same manner as a general time division switch for use in a digital exchange system. These channel memory and peripheral control circuit are integrated into a large-scale integrated circuit (LSI), and provided as one general-purpose IC, in the same manner as in the general time division switch. Incidentally, a laid-open publication (Japanese Patent Laid-Open No. 2000-333279) is used for reference by way of example, and detailed description about the contents of operation of the time division switch 13 will be omitted.

The memory 14 stores various setting information or programs. For example, an SRAM (Static Random Access Memory) having a capacity of 1 Mbyte is used with battery backup so as to store various setting information. A DRAM (Dynamic Random Access Memory) having a capacity of 16 Mbytes is used as a work memory for processing. Further, a card memory having a capacity of 32 Mbytes is used for storing programs. The aforementioned memory configuration is an example of a minimal system configuration. The capacities will be increased in accordance with the functions of the private branch exchange. The embodiment of the present invention will be described below with those memories generically referred to as the memory 14.

The CPU 15 controls the private branch exchange 1. A general-purpose one-chip CPU is used.

The clock generator 16 is a general-purpose programmable clock generator IC for generating four kinds of sync signals. First, a sync signal (referred to as a first sync signal) for 2.4 GHz FHSS wireless base stations (referred to as first wireless base stations) and a sync signal (referred to as a second sync signal) for TDMA/TDD system DECT wireless base stations (referred to as second wireless base stations) are generated individually. Further, a sync signal for extension interfaces 12 connected to the first wireless base stations and a sync signal for extension interfaces 12 connected to the second wireless base stations are generated individually. Thus, the four kinds of sync signals are generated respectively.

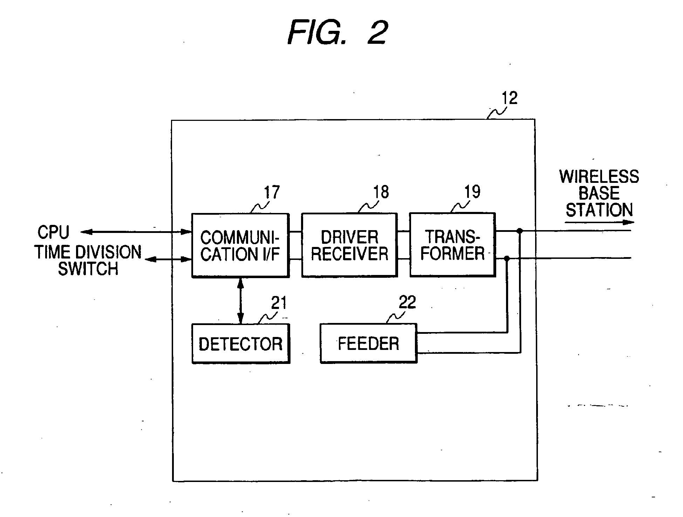

Each extension interface 12a-12d has a function of communicating with a terminal device such as an extension telephone 2, a wireless base station 3, or the like, so as to transmit/receive a control signal for controlling the terminal device or transmit/receive an audio signal. Fig. 2 is a configuration diagram of an extension interface circuit shown in Fig. 1. In Fig. 2, this extension interface circuit 12 has a communication I/F circuit 17 for making communication with the CPU 15, a driver 18, and an impedance matching transformer 19 for making communication with an extension telephone 2 or a wireless base station 3.

A detector 21 has a function of detecting the kind of a terminal connected to the extension interface circuit 12. For example, the detector 21 has a function of determining whether the terminal is an extension telephone 2 or a wireless base station 3 and further determining whether it is for 2.4 GHz or for DECT if the terminal is a wireless base station 3. The detector 21 has a basic configuration in which a control channel having a below-mentioned data format is stored in a shift register and a bit sequence is checked by a selector. The basic configuration including relevant peripheral timing control signals is integrated into a custom LSI.

A feeder 22 has a function of feeding predetermined power to a device connected to a port of the extension interface circuit 12. A power supply controls to supply the predetermined power in a constant period. A general-purpose programmable power supply IC is used for beforehand controlling the mode of a voltage to be supplied.

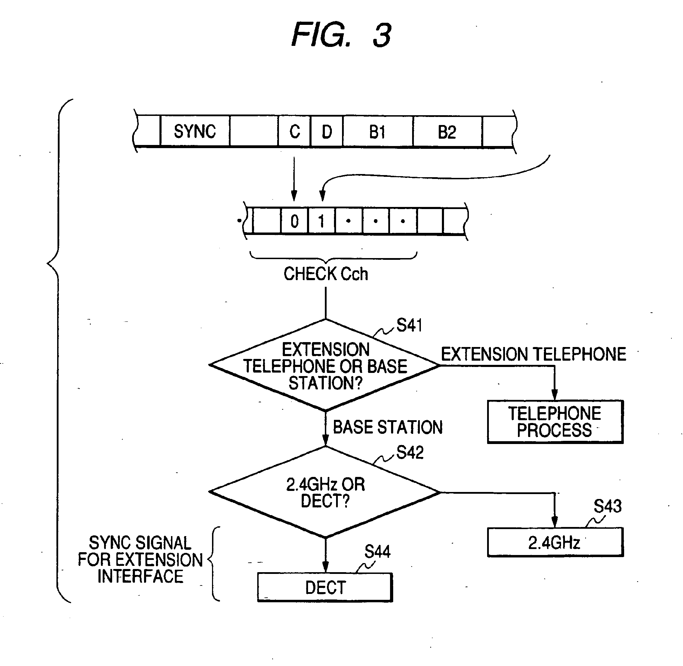

The manner of determination will be described with reference to Fig. 3. Fig. 3 is a diagram for explaining the operation of the detector in Fig. 2. When an extension telephone 2 or a wireless base station 3 is connected to the port of the extension interface 12, the extension telephone 2 or the wireless base station 3 is supplied with power from the feeder 22. At the same time, a control channel (e.g. C channel) with a below-mentioned data format is checked. When a response (first response) is received within a predetermined feeding period, it is confirmed that the connected device is a model (extension telephone 2 or wireless base station 3) corresponding to the voltage mode (S41).

Next, command/response communication with the wireless base station 3 is established using the control channel (e.g. C channel) with the data format. When the communication is established, an enquiry as to the mode of the wireless base station 3 is sent to the wireless base station 3, and whether the mode is a 2.4 GHz mode or a DECT mode is determined based on the result of a response (second response) (S42).

The CPU 15 is notified of the result of determination as to the mode of the base station. After that, of the sync signals supplied from the clock generator 16, which time slot to use for exchanging the information of the wireless base station 3 is designated to the extension interface circuit 12 from the CPU 15. For example, the 2.4 GHz FHSS sync signal corresponds to Slot 1 on a time division highway (S43), and the DECT sync signal corresponds to Slot 2 on the time division highway (S44).

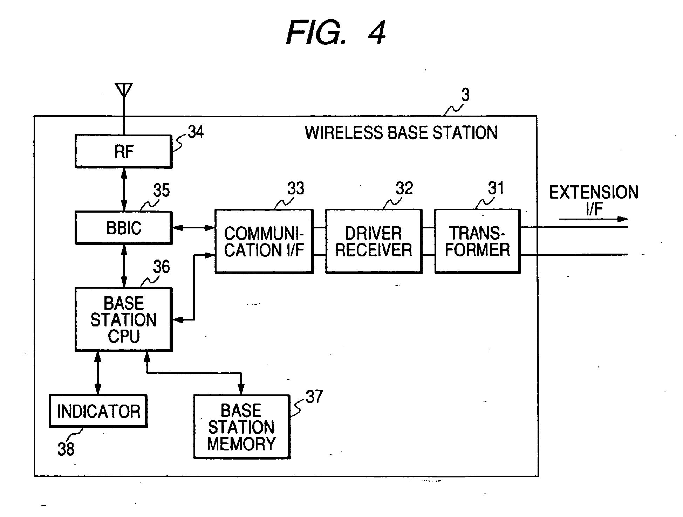

Next, the configuration of the wireless base station 3 will be described with reference to Fig. 4. Fig. 4 is a configuration diagram of the wireless base station in Fig. 1. The wireless base station 3 has a transformer 31, a driver receiver circuit 32, a communication I/F circuit 33, an RF (Radio-Frequency) circuit 34, a baseband IC (BBIC) 35, a base station CPU 36, a base station memory 37 and an indicator 38.

The transformer 31 is a pulse transformer serving for impedance matching with the extension interface 12 in order to transmit/receive a frame output through the extension interface circuit 12.

The driver receiver circuit 32 is a circuit for amplifying a frame signal from the communication I/F 33 and for receiving a frame signal output from the extension interface 12 and transmitting the received frame signal to the communication I/F circuit 33.

The communication I/F circuit 33 is a circuit for transmitting/receiving audio channels and first and second control channels. For example, an audio channel signal transmitted from the extension interface 12 is transmitted to a wireless handset 4 through the BBIC 35 and the RF 34, and an audio signal received from the wireless handset 4 is transmitted to the extension interface 12 over an audio channel of a communication frame. In addition, a signal on the second control channel transmitted from the extension interface 12 is output to the base station CPU 36, and a control signal output from the base station CPU 36 is transmitted to the extension interface 12 over the second control channel of the communication frame. Further, delay correction or the like is performed on a sync signal transmitted from the extension interface 12 through the first control channel, and the corrected sync signal is output to the BBIC 35, while a model code output from the base station CPU 36 is transmitted to the extension interface 12 through the first control channel.

The RF circuit 34 and the baseband IC 35 are wireless circuits for making communication with the wireless handset 4 using an FHSS (Frequency Hopping Spread Spectrum) system, or a DECT system such as TDMA/TDD or the like.

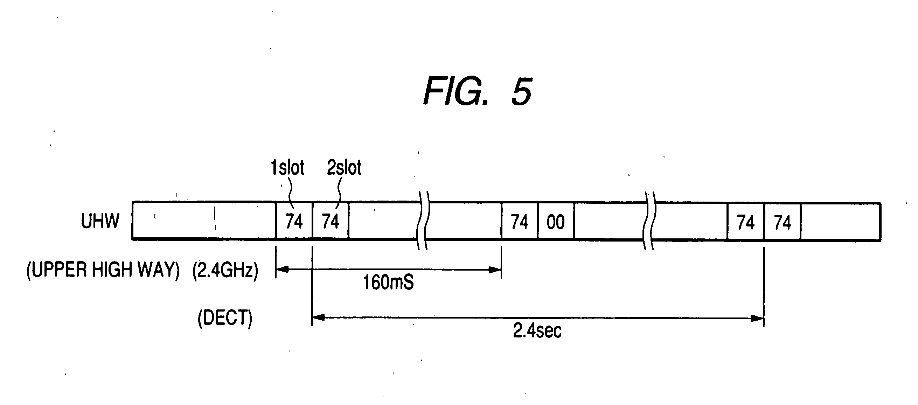

Next, description will be made about the functions of the sync signals from the clock generator 16 to the wireless base station 3. Fig. 5 is a diagram for explaining the slot timing of the sync signals. The clock generator 16 generates a 2.4 GHz FHSS sync signal and a DECT sync signal. These two sync signals are supplied to the extension interface circuit 12 through the time division switch 13 over different slots of one time division highway

For example, the 2.4 GHz FHSS sync signal is put on Slot 1 of the time division highway at intervals of 160 msec as a bit sequence of 74H. On the other hand, the DECT sync signal is put on Slot 2 of the time division highway at intervals of 2.4 sec as a bit sequence of 74H, and output to the time division switch 13.

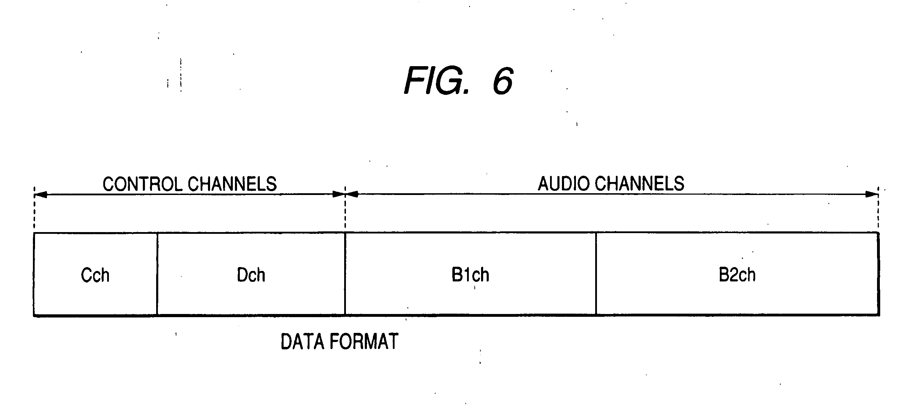

Fig. 6 is a diagram for explaining a data format, which has a data format configuration composed of two audio channels (B1 and B2), a first control channel (Cch) and a second control channel (Dch). Each extension interface 12 can make communication with an extension telephone 2 or a wireless base station 3 using such a data format. Incidentally, this data format is applied to both the transmission frame to be output from the extension interface 12 and the reception frame to be input to the extension interface 12.

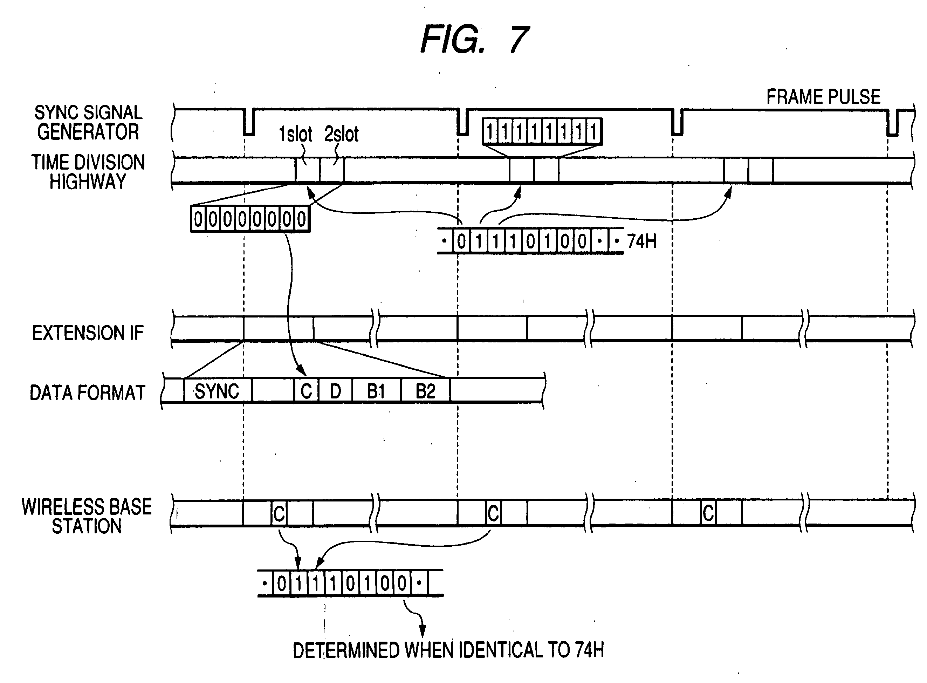

Further, description will be made about the functions of the sync signals among devices. Fig. 7 is a diagram for explaining the functions of the sync signals. First, assume that a wireless base station 3 is connected to the port of the extension interface circuit 12. The feeder 22 supplies power of a voltage programmed in advance. At the same time, the CPU 15 is notified of the connection of the terminal.

The connected wireless base station 3 is supplied with the power. The wireless base station 3 having begun to operate transmits its own model code to the extension interface circuit 12 over a control channel with the data format. For example, the wireless base station 3 frames a signal over the first control channel (Cch) sequentially. When the wireless base station 3 is a 2.4 GHz FHSS wireless base station, the wireless base station 3 transmits a code of the 2.4 GHz FHSS wireless base station, and when the wireless base station 3 is a DECT wireless base station, the wireless base station 3 transmits another code (second response).

The model code is interpreted by the detector 21 of the extension interface circuit 12. The detector 21 frames and reproduces the model code over the first control channel (Cch). The detector 21 detects the model of the connected wireless base station 3 based on the model code, and notifies the CPU 15 of the detected model.

Based on the result of the model detection, the CPU 15 recognizes the model of the wireless base station 3 connected newly. The CPU 15 controls the time division switch 13 and the clock generator 16 so as to supply a bit sequence of 74H to the extension interface circuit 12 over a slot of the time division highway. The CPU 15 arranges 8-bit data as control data required for the 2.4 GHz FHSS wireless base station or the DECT wireless base station in accordance with the result of the model recognition, and transmits the 8-bit data to the extension interface circuit 12 over the time division highway with a bit sequence of 74H as one frame.

The extension interface circuit 12 importing the 8-bit data sequentially reconstructs the data into a data format of 2B+D (first control channel C) and transmits the reconstructed data to the wireless base station 3.

The wireless base station 3 frames the signal of the first control channel (C) sequentially so as to reproduce the 8-bit data and reconstruct the 8-bit data as its own control data. Examples of the control data include movement data or control conditions of the wireless handset 4 or update data of the wireless base station 3 itself.
Furthermore, the wireless base station 3 may additionally provide an identification code (abbreviated to ID code) for identifying the wireless base station 3 itself together with the aforementioned model code of the wireless base station 3 itself to be transmitted at the beginning of operation. Due to the ID code, it is possible to set option functions peculiar to a system user or communication control conditions peculiar to a call region of the wireless base station 3. These options or communication control conditions are transmitted from the private branch exchange 1 to the wireless base station 3 through the extension interface circuit 12 as the aforementioned update data of the wireless base station 3 itself.

Description has been made above using an example in which a bit sequence of 74H is used in a time division highway, an example in which a signal on the first control channel (Cch) is used, and an example in which a 2.4 GHz FHSS wireless base station or a DECT wireless base station is used as the wireless base station 3. However, the present invention is not to be interpreted exclusively to such a bit sequence, such a channel, such a radio frequency or such a communication system. Not to say, the present invention can use another hexadecimal code than the bit sequence, and the contents of the present invention can be applied to another frequency, another channel or another communication system. The same thing can be also applied to the overall operation which will be described below.

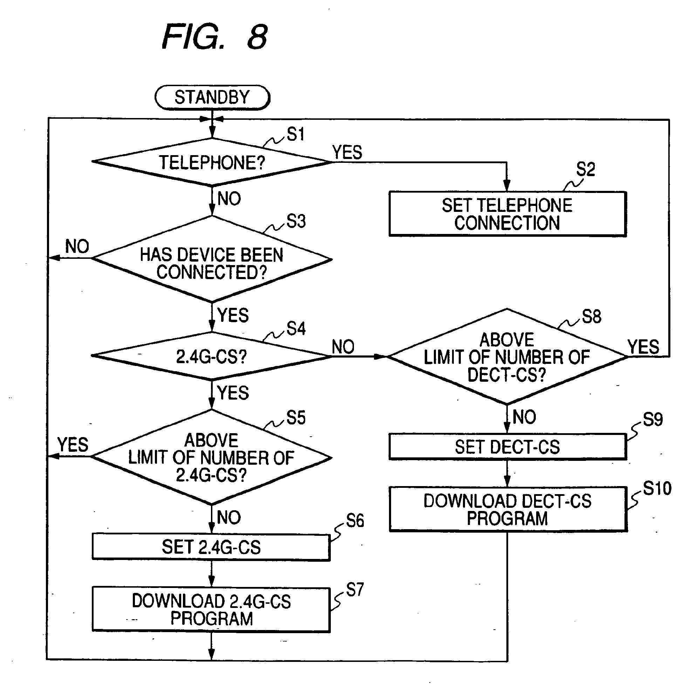

The operation of the private branch exchange in the private branch exchange system configured thus will be described below specifically with reference to the flow chart of Fig. 8.

The CPU 15 of the private branch exchange 1 monitors the C channel in the extension interface 12, and determines whether a model code of an extension telephone 2 or a model code of a wireless base station 3 has been sent to the C channel or not (S1). When the CPU 15 concludes that a model code of an extension telephone 2 has been sent, the CPU 15 refers to the memory 14 and determines whether this extension telephone 2 has been set or not. When the CPU 15 concludes that the extension telephone 2 has not been set yet, the CPU 15 extracts a default value for the extension telephone from the memory 14, and sets the extension telephone in the memory 14 so as to associate the extension telephone with the extension interface 12 where the model code was determined (S2).

On the other hand, when the CPU 15 concludes that a model code of a wireless base station 3 has been received, the CPU 15 determines whether communication with this wireless base station 3 can be established or not (S3). Whether the wireless base station 3 has been connected to the extension interface 12 or not is determined as follows. That is, a request signal for communication establishment is received from the first control channel or the second control channel, and it is determined whether a predetermined exchange could be performed or not. Incidentally, this determination is made for each extension interface 12. In such a manner, the CPU 15 establishes the communication with the wireless base station 3 by the predetermined exchange for communication establishment.

When the model code received in the first control channel is a model code of a wireless base station and for 2.4 GHz, the CPU 15 concludes that the device connected to the extension interface 12 is a 2.4 GHz wireless base station (S4). Incidentally, the configuration may be adapted as follows. That is, the model code received in the first control channel serves for identification as to whether the connected device is an extension telephone 2 or a wireless base station 3. A second model code (indicating whether the wireless base station 3 is a 2.4 GHz wireless base station or a DECT wireless base station) transmitted from the wireless base station 3 via the second control channel is received as soon as communication is established in the step S3. When the code is a mode code of a 2.4 GHz wireless base station, it is concluded that the wireless base station 3 is a 2.4 GHz wireless base station.

Next, the CPU 15 determines whether the number of active wireless base stations having been already connected to the extension interfaces 12 exceeds a predetermined number (which will be, for example, described below on the assumption that connections with up to four wireless base stations are permitted) or not, based on the number (set number) of wireless base stations set in the memory 14 (S5). When the number of active wireless base stations 3 exceeds the predetermined number, the CPU 15 does not set the wireless base station connected to the extension interface 12 in the step S1, and transmits a notification (connection-refused notification), which indicates that connection has been refused due to the limit of the number of wireless base stations, to the wireless base station 3 via the second control channel. Incidentally, the configuration may be adapted so that the connection-refused notification is not transmitted and any notification is not issued.

When the CPU 15 concludes in the step S5 that the number of active wireless base stations 3 does not exceed the predetermined number, the CPU 15 refers to the memory 14 and determines whether this wireless base station 3 has been already set or not. When the CPU 15 concludes that the wireless base station 3 has not been set yet, the CPU 15 extracts a default value of a 2.4 GHz wireless base station from the memory 14, and sets the wireless base station 3 in the memory 14 so as to associate the wireless base station 3 with the extension interface 12 where the model code was determined (S6). After that, the CPU 15 uses the second control channel and/or the audio channels so as to transmit a 2.4 GHz wireless base station program to the wireless base station 3 connected to the extension interface 12 (S7, download). Incidentally, the CPU 15 may transmit the program only when a request to send the 2.4 GHz wireless base station program is received from the wireless base station 3 through the second control channel. After the CPU 15 sends the program to the wireless base station 3 in such a manner, the CPU 15 sends a request to restart to the wireless base station 3 through the second control channel. When the restart of the wireless base station 3 is terminated, the CPU 15 transmits a 2.4 GHz sync signal through the first control channel. The wireless base station 3 extracts a wireless sync signal from the first control channel, and establishes synchronism of its wireless portion based on this wireless sync signal.

On the other hand, when the CPU 15 concludes in the step S4 that the model code received in the first control channel is a model code of a wireless base station 3 and for DECT, the CPU 15 concludes that the device connected to the extension interface 12 is a DECT wireless base station. Incidentally, the configuration may be adapted as follows. That is, the model code received in the first control channel serves for identification as to whether the connected device is an extension telephone 2 or a wireless base station 3. A second model code (indicating whether the wireless base station 3 is a 2.4 GHz wireless base station or a DECT wireless base station) transmitted from the wireless base station 3 via the second control channel is received as soon as communication is established in the step S3. When the code is a mode code of a DECT wireless base station, it is concluded that the wireless base station 3 is a DECT wireless base station.

Then, the CPU 15 determines whether the number of active wireless base stations 3 having been already connected to the extension interface 12 exceeds a predetermined number (for example, four) or not, based on the number of wireless base stations 3 set in the memory 14 (S8). When the number of active wireless base stations 3 is equal to the predetermined number, the CPU 15 does not set the wireless base station 3 newly connected to the extension interface 12 in the step S1, and transmits a notification (connection-refused notification), which indicates that connection has been refused due to the limit of the number of wireless base stations 3, to the wireless base station 3 via the second control channel. Incidentally, the configuration may be adapted so that the connection-refused notification is not transmitted and any notification is not issued.

When the CPU 15 concludes in the step S8 that the number of active wireless base stations 3 does not exceed the predetermined number, the CPU 15 refers to the memory 14 and determines whether this wireless base station 3 has been already set or not. When the CPU 15 concludes that the wireless base station 3 has not been set yet, the CPU 15 extracts a default value of a DECT wireless base station from the memory 14, and sets the wireless base station 3 in the memory 14 so as to associate the wireless base station 3 with the extension interface 12 where the model code was determined (S9). After that, the CPU 15 uses the second control channel and/or the audio channels so as to transmit a DECT wireless base station program to the wireless base station 3 connected to the extension interface 12 (S10, download). Incidentally, the CPU 15 may transmits the program only when a request to send the DECT wireless base station program is received from the wireless base station 3 through the second control channel. After the CPU 15 sends the program to the wireless base station 3 in such a manner, the CPU 15 sends a request to restart to the wireless base station 3 through the first control channel. When the restart of the wireless base station 3 is terminated, the CPU 15 transmits a DECT sync signal through the first control channel. The wireless base station 3 extracts a wireless sync signal from the first control channel, and establishes synchronism of its wireless portion based on this wireless sync signal.

When the setting of connection of the wireless base station 3 is terminated in such a manner, the CPU 15 sends an "operation start notification" to the wireless base station 3. On and after that, the private branch exchange 1 and the wireless base station 3 exchange control data via the second control channel and exchange audio signals via the audio channels.

In such a manner, the private branch exchange according to Embodiment 1 of the present invention receives a model code from the wireless base station 3 using the first control channel, whereby it can be concluded that the device connected to the extension interface 12 is a wireless base station 3. In addition, once the wireless base station 3 has been connected to the extension interface 12, a sync signal is transmitted from the private branch exchange 1 to the wireless base station 3 via the first control channel.
Accordingly, the wireless base station 3 can use this sync signal to synchronize a radio signal with a radio signal of another wireless base station 3 connected to another extension interface 12 so as to make communication therewith.

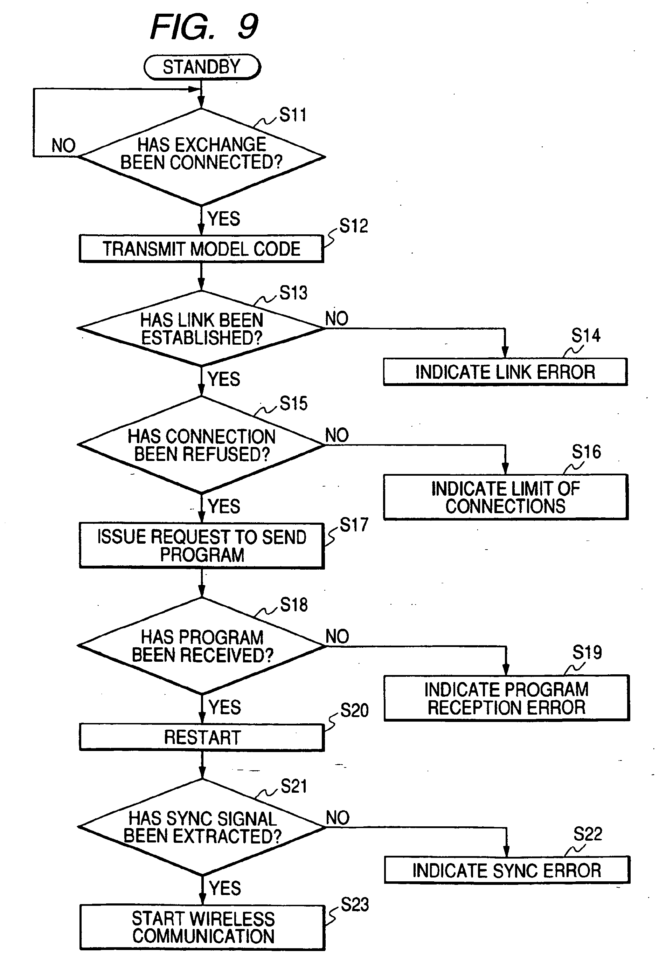

Next, the operation of each wireless base station will be described with reference to the flow chart of Fig. 9.

When power is applied to the wireless base station 3, the base station CPU 36 determines whether the wireless base station 3 has been connected to an extension interface 12 of the private branch exchange 1 or not (S11). Whether the wireless base station 3 has been connected to an extension interface 12 or not is determined based on detection of a frame transmitted from the extension interface 12 at predetermined intervals.

When the base station CPU 36 concludes that the wireless base station 3 has been connected to an extension interface 12, the base station CPU 36 transmits a frame including a request signal for communication establishment to the extension interface 12 via the second control channel. In addition, a model code (for example, a model code indicating a DECT system) stored in the base station memory 37 of the wireless base station 3 is transmitted to the extension interface 12 over the first control channel of the communication frame (S12). Incidentally, the configuration may be adapted as follows. That is, the model code transmitted over the first control channel is designed for identification as to whether the connected device is an extension telephone 2 or a wireless base station 3. A second model code (indicating whether the wireless base station 3 is a 2.4 GHz wireless base station or a DECT wireless base station) transmitted from the wireless base station 3 via the second control channel is transmitted as soon as communication is established.

Next, the base station CPU 36 determines whether a link of wireless communication with the private branch exchange 1 via the extension interface 12 has been established or not (S 13). When the communication link has not been established, a link error is indicated on the indicator 38 (S14). Incidentally, in the case of the indicator 38, for example, the link error is indicated by turning on a red light.

In the case where the communication link has been established in the step S 13, when a connection-refused notification is received from the private branch exchange 1 via the second control channel (S 15), the base station CPU 36 indicates a connection limit on the indicator 38. Incidentally, in the case of the indicator 38, for example, a connection limit error is indicated by blinking the red light.

When a connection-refused notification is not received in the step S 15 or when a connection-accepted notification is received in the step S15, the base station CPU 36 issues a request to send a program for a wireless base station (S 17). When the program cannot be received normally, a program reception error is indicated on the indicator 38 (S18). Incidentally, in the case of the indicator 38, for example, the program reception error is indicated by blinking an orange light.

When the base station CPU 36 concludes in the step S 18 that the program has been received, the base station CPU 36 stores this program in a boot area of the base station memory 37. After that, when a restart request is received from the private branch exchange 1, the base station CPU 36 begins a restart operation and activates the program stored in the boot area (S20).

After that, the communication I/F circuit 33 receives a sync signal from the first control channel, and outputs a radio signal from the RF circuit 34 so that communication with the wireless handset 4 can be established (S23). When the sync signal cannot be received, a sync signal extraction error is indicated on the indicator 38 (S18). Incidentally, in the case of the indicator 38, for example, the sync signal extraction error is indicated by blinking the orange light.

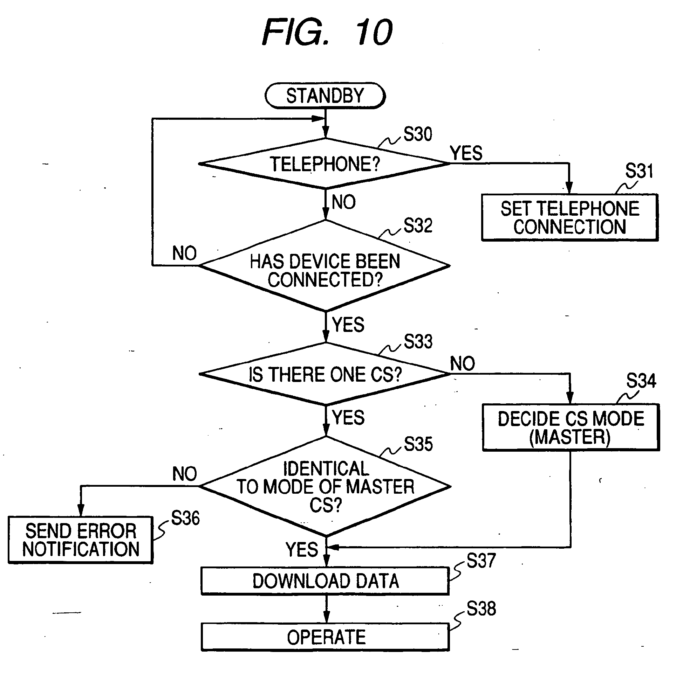

In the aforementioned embodiment, description has been made about the private branch exchange 1 to which a 2.4 GHz wireless base station and a DECT wireless base station can be connected simultaneously. However, the private branch exchange 1 can be designed to operate only one kind of wireless base station of them. Such an operation will be described below specifically with reference to the flow chart of Fig. 10.

The operation of steps S30-S32 is similar to the aforementioned operation of steps S1-S3. Therefore, description thereof will be omitted.

After the communication with the wireless base station 3 is established in the step S32, the CPU 15 determines whether the number of active wireless base stations 3 having been already connected to the extension interfaces 12 is at least one or not, based on the number of wireless base stations set in the memory 14 (S33). When the CPU 15 concludes that there is no active wireless base station 3, the CPU 15 determines whether the wireless base station 3 connected to the extension interface 12 is a 2.4 GHz wireless base station or a DECT wireless base station, based on the model code received in the step S31. The determined communication system (2.4 GHz or DECT) of the wireless base station 3 is set in the memory 14 as a wireless communication system of the private branch exchange 1 (S34).

On the other hand, when the CPU 15 concludes in the step S33 that the number of active wireless base stations 3 is at least one, the CPU 15 determines whether the wireless base station 3 connected to the extension interface 12 is a 2.4 GHz wireless base station or a DECT wireless base station, based on the model code received in the step S31, and determines whether the determined communication system (2.4 GHz or DECT) of the wireless base station 3 is identical to the wireless communication system of the private branch exchange 1 set in the memory 14 or not (S35). As a result of determination, when the CPU 15 concludes that the determined communication system is not identical to the set wireless communication system, the CPU 15 does not set the wireless base station 3 connected to the extension interface 12, but transmits a notification (connection-refused notification), which indicates the communication system of the wireless base station is wrong, to the wireless base station 3 through the second control channel. Incidentally, the configuration may be adapted so that the connection-refused notification is not transmitted and any notification is not issued. Further, the operation on and after the step S37 may be performed without determining the communication system (2.4 GHz or DECT) of the wireless base station 3 in the step S35.

After the operation of the step S34 is terminated or when it is concluded in the step S35 that the determined communication system is identical to the set wireless communication system, the CPU 15 transmits various parameters to the wireless base station 3 through the second control channel.

Here, the parameters includes (1) a private branch exchange model code, (2) a base station number, (3) a C channel delay, (4) a PCM system mode, (5) a private branch exchange number, (6) an ADPCM/PCM selection, etc.

The private branch exchange model code is a code indicating the kind of private branch exchange. The wireless base station 3 receiving this code changes over the communication protocol between the extension interface 12 and the wireless base station 4 so as to establish communication with the extension interface 12. In such a manner, communication can be performed with a proper protocol adapted to each private branch exchange after the communication is established.

The base station number is a unique number assigned to each wireless base station 3. The base station number is included in a radio signal output from each wireless base station 3 so as to allow each wireless handset 4 or the like to recognize the wireless base station 3. When the base station CPU 36 of the wireless base station 3 receives a base station number, the base station CPU 36 outputs a radio signal including the received base station number.

The C channel delay is calculated as a signal delay time between the extension interface 12 and the wireless base station 3 based on the timing when a signal is output from the extension interface 12 and the timing when the signal turns back from the wireless base station 3 connected to the extension interface 12. The CPU 15 calculates the C channel delay. When the base station CPU 36 of the wireless base station 3 receives the C channel delay from the extension interface 12, the base station CPU 36 outputs a radio signal based on the received delay and a sync signal.

The PCM system mode indicates whether the PCM system of an audio digital signal exchanged through the B channel is A-law or µ-law. The base station CPU 36 of the wireless base station 3 decides the PCM system in accordance with the PCM system mode transmitted from the private branch exchange 1.

The private branch exchange number is a unique number assigned to each private branch exchange. The private branch exchange number is included in a radio signal output from each wireless base station 3 in order to allow each wireless handset 4 or the like to recognize the wireless base station 3 when a plurality of private branch exchanges are provided.

The ADPCM/PCM selection indicates whether the PCM system of an audio digital signal exchanged through the B channel is ADPCM (32 kbps) or PCM (64kbps). The base station CPU 36 of each wireless base station 3 decides either ADPCM or PCM in accordance with information transmitted from the private branch exchange 1, and performs transmission/reception over the B channel.

When the wireless base station 3 receives the parameters transmitted from the private branch exchange 1 in such a manner, the wireless base station 3 changes over to a normal operation state (operation mode).

Incidentally, there is no description about transmission/reception of parameters in the operation shown in the flow chart of Fig. 8 or Fig. 9. However, transmission/reception of parameters can be performed together with transmission/reception of a program or in place of transmission/reception of the program. On the other hand, there is no description about transmission/reception of a program or limitation of the number of wireless base stations in the flow chart of Fig. 10. Not to say, however, transmission/reception of a program or limitation of the number of wireless base stations can be performed as described in the flow chart of Fig. 8.

In addition, in Embodiment 1 of the present invention, a sync signal is output from the private branch exchange 1 after a predetermined operation is performed between the private branch exchange 1 and each wireless base station 3. However, when there is only one kind of wireless base station 3 (for example, only the DECT system), the sync signal may be always output to the second control channel.

In addition, in Embodiment 1 of the present invention, a program for a wireless base station is transmitted/received between the private branch exchange 1 and each wireless base station 3. However, the program can be stored in the wireless base station 3 in advance so that the program does not have to be transmitted/received.

In addition, in Embodiment 1 of the present invention, description has been made on the assumption that a program for a 2.4 GHz wireless base station and a program for a DECT wireless base station are provided separately. However, one program may be shared between the two kinds of wireless base stations. In addition, the kinds of wireless base stations are not limited to the 2.4 GHz wireless base station and the DECT wireless base station. For example, the present invention can be also applied to three or more kinds of wireless base stations including a 9GHz-band wireless base station.

In addition, description has been made above on the assumption that connections of up to four wireless base stations are permitted. However, the number of connected wireless base stations is not limited to four, but another number of connected wireless base stations can be set in accordance with the terminal reception capacity of the private branch exchange 1 (that is, the control capacity of the exchange).

Incidentally, this application us based on Japanese Patent Application No. 2003-407231 filed on December 5, 2003.

### Industrial Applicability

In an exchange to which a wireless base station capable of communicating with a plurality of wireless handsets can be connected, the wireless base station can be operated without any interface dedicated to the wireless base station.

## Claims

1. A private branch exchange (1) comprising:
an extension interface (12) capable of communicating with an extension telephone or a wireless base station;
a time division switch (13) for connecting/disconnecting channels;
a memory (14) for storing setting information and/or a program;
a clock generator (16) for generating a sync signal for said wireless base station; and
a CPU (15) for controlling said private branch exchange (1) as a whole;
wherein said setting information includes data required to control communication with a wireless base station to be connected to said extension interface (12);
said extension interface (12) includes a feeder (22) for feeding predetermined power to said extension telephone or said wireless base station, and a detector (21) for detecting the kind of said extension telephone or said wireless base station;
said detector (21) detects said extension telephone or said wireless base station based on a response received by said extension interface (12) within a predetermined feeding period after power is supplied from said feeder (22);
when said detector (21) detects said wireless base station, said extension interface (12) communicates with said wireless base station, and said detector (21) detects the kind of said wireless base station based on a response of said wireless base station to an enquiry transmitted by said extension interface (12); and
a default value of the kind of said wireless base station so as to associate said wireless base station with said extension interface (12) is set as part of the setting information

2. A private branch exchange (1) according to claim 1, wherein said CPU (15) designates a time slot of said sync signal to be supplied from said clock generator (16) to said extension interface (12) through said time division switch (13) as said time slot corresponding to the kind of said wireless base station for said extension interface (12) based on a result of detection of said detector (21).

3. A private branch exchange (1) according to claim 1 or 2,
wherein said CPU (15) transmits a program for said wireless base station corresponding to said detected kind based on said detection of the kind of said wireless base station.

4. A private branch exchange (1) according to claim 1 or 2,
wherein said setting information includes the number of said wireless base stations connectable to said extension interfaces (12);
a plurality of extension interfaces (12) including said extension interface (12) are provided, and said CPU (15) sets the set number of said wireless base stations connectable to said extension interfaces (12) in advance so as not to set a number of said wireless base stations beyond said set number.

5. A private branch exchange (1) according to claim 1 or 2,
wherein said setting information includes the number of said wireless base stations connectable to said extension interfaces (12);
a plurality of extension interfaces (12) including said extension interface (12) are provided, and said CPU (15) sets the set number of said wireless base stations connectable to said extension interfaces (12) in advance, and transmits a program for a wireless base station connected newly when the number of said wireless base stations including said newly connected wireless base station is within said set number.

6. A private branch exchange (1) according to claim 1 or 2, wherein a plurality of extension interfaces (12) include said extension interface (12) are provided;
when the number of said wireless base stations connected to said extension interfaces (12) is one, said CPU (15) stores a model code into said memory (14), said model code being transmitted from said wireless base station; and
when a new wireless base station is connected to said extension interfaces (12), said new wireless base station is operated as long as a model code of said new wireless base station is identical to said model code stored in said memory (14).

7. A private branch exchange (1) according to any one of claims 3 to 5, wherein said CPU (15) transmits parameter information to said wireless base station connected newly.

8. A private branch exchange (1) according to claim 1 or 2, wherein said wireless base station transmits an ID code to said extension interface (12) in addition to said model code, said ID code serving to identify said wireless base station itself.

9. A private branch exchange (1) according to claim 1 or 2, wherein said wireless base station includes an indicator for indicating restriction of connection when connection of said wireless base station is not permitted by said private branch exchange (1).

## Patentansprüche

1. Nebenstellenanlage (1), umfassend:
eine Nebenstellenschnittstelle (12), die mit einem Nebenstellentelefon oder einer drahtlosen Basisstation kommunizieren kann;
einen Zeitmultiplexschalter (13) zum Verbinden/Trennen von Kanälen;
einen Speicher (14) zum Speichern einer Einstellinformation und/oder eines Programms;
einen Taktgenerator (16) zum Erzeugen eines Sync-Signals für die drahtlose Basisstation; und
eine CPU (15) zum Steuern der gesamten Nebenstellenanlage (1);
wobei die Einstellinformation Daten umfasst, die zum Steuern einer Kommunikation mit einer drahtlosen Basisstation erforderlich sind, die mit der Nebenstellenschnittstelle (12) verbunden werden soll;
wobei die Nebenstellenschnittstelle (12) eine Zufuhreinrichtung (22) zum Zuführen vorbestimmter Leistung zu dem Nebenstellentelefon oder der drahtlosen Basisstation und einen Detektor (21) zum Detektieren der Art des Nebenstellentelefons oder der drahtlosen Basisstation umfasst;
wobei der Detektor (21) das Nebenstellentelefon oder die drahtlose Basisstation auf der Grundlage einer Antwort detektiert, die durch die Nebenstellenschnittstelle (12) innerhalb einer vorbestimmten Zufuhrperiode empfangen wird, nachdem Leistung von der Zufuhreinrichtung (22) geliefert wurde;
wobei, wenn der Detektor (21) die drahtlose Basisstation detektiert, die Nebenstellenschnittstelle (12) mit der drahtlosen Basisstation kommuniziert, und der Detektor (21) die Art der drahtlosen Basisstation auf der Grundlage einer Antwort der drahtlosen Basisstation auf eine Anfrage, die durch die Nebenstellenschnittstelle (12) übertragen wird, detektiert; und
wobei ein Voreinstellungswert der Art der drahtlosen Basisstation als Teil der Einstellinformation eingestellt wird, um die drahtlose Basisstation mit der Nebenstellenschnittstelle (12) in Verbindung zu bringen.

2. Nebenstellenanlage (1) nach Anspruch 1,
wobei die CPU (15) einen Zeitschlitz des Sync-Signals, das von dem Taktgenerator (16) zu der Nebenstellenschnittstelle (12) über den Zeitmultiplexschalter (13) geliefert werden soll, als den Zeitschlitz entsprechend der Art der drahtlosen Basisstation für die Nebenstellenschnittstelle (12) auf der Grundlage eines Ergebnisses der Detektion des Detektors (21) bestimmt.

3. Nebenstellenanlage (1) nach Anspruch 1 oder 2,
wobei die CPU (15) auf der Grundlage der Detektion der Art der drahtlosen Basisstation ein Programm für die drahtlose Basisstation, das der detektierten Art entspricht, überträgt.

4. Nebenstellenanlage (1) nach Anspruch 1 oder 2,
wobei die Einstellinformation die Anzahl der drahtlosen Basisstationen umfasst, die mit den Nebenstellenschnittstellen (12) verbunden werden können;
wobei mehrere Nebenstellenschnittstellen (12) einschließlich der Nebenstellenschnittstelle (12) bereitgestellt werden, und wobei die CPU (15) die eingestellte Anzahl der mit den Nebenstellenschnittstellen (12) verbindbaren drahtlosen Basisstationen vorab einstellt, um nicht eine Anzahl der drahtlosen Basisstationen jenseits der eingestellten Anzahl einzustellen.

5. Nebenstellenanlage (1) nach Anspruch 1 oder 2,
wobei die Einstellinformation die Anzahl der drahtlosen Basisstationen umfasst, die mit den Nebenstellenschnittstellen (12) verbunden werden können;
wobei mehrere Nebenstellenschnittstellen (12) einschließlich der Nebenstellenschnittstelle (12) bereitgestellt werden, und die CPU (15) die eingestellte Anzahl der drahtlosen Basisstationen, die mit den Nebenstellenschnittstellen (12) verbunden werden können, vorab einstellt, und ein Programm für eine neu verbundene drahtlose Basisstation überträgt, wenn die Anzahl der drahtlosen Basisstationen einschließlich der neu verbundenen drahtlosen Basisstation innerhalb der eingestellten Anzahl liegt.

6. Nebenstellenanlage (1) nach Anspruch 1 oder 2,
wobei mehrere Nebenstellenschnittstellen (12) einschließlich der Nebenstellenschnittstelle (12) bereitgestellt werden;
wobei die Anzahl der mit den Nebenstellenschnittstellen (12) verbundenen drahtlosen Basisstation Eins ist, wobei die CPU (15) einen Modellcode in den Speicher (14) speichert, wobei der Modellcode von der drahtlosen Basisstation übertragen wird; und
wenn eine neue drahtlose Basisstation mit den Nebenstellenschnittstellen (12) verbunden wird, die neue drahtlose Basisstation betrieben wird, solange ein Modellcode der neuen drahtlosen Basisstation identisch mit dem in dem Speicher (14) gespeicherten Modellcode ist.

7. Nebenstellenanlage (1) nach einem der Ansprüche 3 bis 5, wobei die CPU (15) eine Parameterinformation an die neu verbundene drahtlose Basisstation überträgt.

8. Nebenstellenanlage (1) nach Anspruch 1 oder 2,
wobei die drahtlose Basisstation zusätzlich zu dem Modellcode einen ID-Code an die Nebenstellenschnittstelle (12) überträgt, wobei der ID-Code dazu dient, die drahtlose Basisstation selbst zu identifizieren.

9. Nebenstellenanlage (1) nach Anspruch 1 oder 2,
wobei die drahtlose Basisstation einen Indikator zum Angeben einer Beschränkung der Verbindung umfasst, wenn die Verbindung der drahtlosen Basisstation nicht durch die Nebenstellenanlage (1) zugelassen wird.

## Revendications

1. Central téléphonique privé (1) comprenant :
une interface d'extension (12) capable de communiquer avec un téléphone d'extension ou avec une station de base sans fil ;
un commutateur de division temporelle (13) pour connecter/déconnecter des canaux ;
une mémoire (14) pour stocker des informations de paramétrage et/ou un programme ;
un générateur horloge (16) pour générer un signal de synchronisation pour ladite station de base sans fil ; et
une unité centrale (15) pour commander dans son ensemble ledit central téléphonique privé (1) ;
dans lequel lesdites informations de paramétrage incluent des données requises pour commander les communications avec une station de base sans fil à connecter à ladite interface d'extension (12) ;
ladite interface d'extension (12) inclut un moyen d'alimentation (22) pour alimenter une puissance prédéterminée audit téléphone d'extension ou à ladite station de base sans fil, et un détecteur (21) pour détecter le type dudit téléphone d'extension ou de ladite station de base sans fil ;
ledit détecteur (21) détecte ledit téléphone d'extension ou ladite station de base sans fil en se basant sur une réponse reçue par ladite interface d'extension (12) dans une période d'alimentation prédéterminée après fourniture d'une puissance depuis ledit moyen d'alimentation (22) ;
quand ledit détecteur (21) détecte ladite station de base sans fil, ladite interface d'extension (12) communique avec ladite station de base sans fil, et ledit détecteur (21) détecte le type de ladite station de base sans fil en se basant sur une réponse de ladite station de base sans fil à une interrogation transmise par ladite interface d'extension ; et
une valeur de défaut concernant le type de ladite station de base sans fil est fixée en tant que partie d'une information de paramétrage, de manière à associer ladite station de base sans fil avec ladite interface d'extension (12).

2. Central téléphonique privé (1) selon la revendication 1,
dans lequel ladite unité centrale (15) désigne une fenêtre temporelle dudit signal de synchronisation à fournir depuis ledit générateur horloge (16) à ladite interface d'extension (12) via ledit commutateur de division temporelle (13) comme étant ladite fenêtre temporelle correspondant au type de ladite station de base sans fil pour ladite interface d'extension (12) en se basant sur un résultat de détection dudit détecteur (21).

3. Central téléphonique privé (1) selon la revendication 1 ou 2,
dans lequel ladite unité centrale (15) transmet un programme pour ladite station de base sans fil, correspondant audit type détecté en se basant sur la détection du type de ladite station de base sans fil.

4. Central téléphonique privé (1) selon la revendication 1 ou 2,
dans lequel lesdites informations de paramétrage incluent le nombre desdites stations de base sans fil susceptibles d'être connectées à ladite interface d'extension (12) ;
une pluralité d'interfaces d'extension (12) incluant ladite interface d'extension (12) sont prévues, et ladite unité centrale (15) fixe le nombre desdites stations de base sans fil susceptibles d'être connectées auxdites interfaces d'extension (12) à l'avance de manière à ne pas fixer un nombre desdites stations de base sans fil au-delà dudit nombre fixé.

5. Central téléphonique privé (1) selon la revendication 1 ou 2,
dans lequel lesdites informations de paramétrage incluent le nombre desdites stations de base sans fil susceptibles d'être connectées auxdites interfaces d'extension (12) ;
une pluralité d'interfaces d'extension (12) incluant ladite interface d'extension (12) sont prévues, et ladite unité centrale (15) fixe le nombre desdites stations de base sans fil susceptibles d'être connectées auxdites interfaces d'extension (12) à l'avance, et transmet un programme pour une station de base sans fil nouvellement connectée quand le nombres desdites stations de base sans fil, incluant ladite station de base sans fil nouvellement connectée, est à l'intérieur dudit nombre fixé.

6. Central téléphonique privé (1) selon la revendication 1 ou 2, dans lequel une pluralité d'interfaces d'extension (12) incluant ladite interface d'extension (12) sont prévues ;
quand le nombre desdites stations de base sans fil connectées auxdites interfaces d'extension (12) est égal à un, ladite unité centrale (15) stocke un code de modèle dans ladite mémoire (14), ledit code de modèle étant transmis depuis ladite station de base sans fil ; et
quand une nouvelle station de base sans fil est connectée auxdites interfaces d'extension (12), ladite nouvelle station de base sans fil est mise en fonctionnement aussi longtemps qu'un code de modèle de ladite nouvelle station de base sans fil est identique audit code de modèle stocké dans ladite mémoire (14).

7. Central téléphonique privé (1) selon l'une quelconque des revendications 3 à 5, dans lequel ladite unité centrale (15) transmet des informations paramètres à ladite station de base sans fil nouvellement connectée.

8. Central téléphonique privé (1) selon la revendication 1 ou 2, dans lequel ladite station de base sans fil transmet un code d'identification à ladite interface d'extension (12) en addition audit code de modèle, ledit code d'identification servant à identifier ladite station de base sans fil elle-même.

9. Central téléphonique privé (1) selon la revendication 1 ou 2, dans lequel ladite station de base sans fil inclut un indicateur pour indiquer une restriction de la connexion quand la connexion de ladite station de base sans fil n'est pas permise par ledit central téléphonique privé (1).
